# EUROPEAN PATENT SPECIFICATION

(11) **EP 1 095 820 B1**
(45) Date of publication and mention of the grant of the patent: **08.10.2003**
(21) Application number: 99850157.1
(22) Date of filing: 25.10.1999
(51) Int. Cl.: B60R 9/06, B60R 9/10

(54) **Cargo carrier**
Ladungsträger
Porte-charges

(43) Date of publication of application: 02.05.2001
(73) Proprietor: Thule Sweden AB, 330 33 Hillerstorp (SE)
(72) Inventor: Pesch, Michael, 74532 Ilshofen-Eckarthausen (DE)
(74) Representative: Andersson, Per Rune

(56) References cited:
- EP-A- 0 710 588
- WO-A-92/12027
- WO-A-93/04895
- WO-A-98/09841
- DE-A- 3 020 367
- DE-A- 19 716 670
- DE-U- 9 303 510
- DE-U- 9 404 236
- DE-U- 9 413 008
- DE-U- 29 811 279
- FR-A- 2 684 056
- NL-A- 8 402 794

## Description

### TECHNICAL FIELD

The present invention relates to an auxiliary cargo carrier according to the preamble of claim 1.

### BACKGROUND ART

Cargo carriers for cars supported by a towbar ball are well known, e.g. the THULE bicycle carrier 989. This carrier comprises a clamping device with one movable and one fixed clamping member. The movably arranged damping member is put under tension by a tensioning lever, which is carrying an actuating bolt, protruding from the lever base a bit separated from a lever axis. The force acting on the movably mounted clamping member is linearly depending on the force acting on the lever end, which is manually displaced. The tension thus achieved is large enough to secure that the carrier clamping device does not leave the ball, and it is also normally large enough to safely keep the carrier from turning with the ball as a center. As an additional precautionary measure, the carrier is equipped with a fork-like securing device, which connects to the towbar stem, protruding from the vehicle. However, many modem cars and car bumpers are designed differently from older cars, and the consequence of this is that the towbar stem, holding the towbar ball is protruding almost upright from the car, thus making it hard to find a good connection with a simple securing device, forking the stem.

In WO 93 04895 a device for fastening a load carrier according to the preamble of claim 1 and as described above is disclosed. The device has two clamping members and a lever, which can be manipulated to achieve a clamping effect. The device has an adjustment possibility to counter wear by turning a threaded drawbar. A similar carrier is disclosed in DE 30 20 367. This carrier has a pivoting member, which can be moved by a lever against a towbar ball in order to secure the carrier to the ball. A further example of a carrier within this technical field is described in DE G 93 03 510. This carrier has a clamping device similar to the one in DE 3020367 with a lever acting on a member which in turn secures the device to a towbar ball. Neither of the two last mentioned has a simple adjustment possibility to counter wear.

### DISCLOSURE OF THE INVENTION

The product is eliminating the need of towbar supported cargo holder to have an additional securing device, clamping the towbar stem. The clamping device is according to the invention adjustable to compensate for wear etc. In the new cargo carrier therefore one clamping device is designed according to the characterising part of claim 1. With this design the clamping force or tension from the two clamping members at the towbar ball can be large enough to safely hold the cargo carrier without the need of an additional fork-like device, holding the towbar stem.
Preferrably the cargo carrier is designed in the way that the normal through the contact point is past the actuating part axis when the lever is in its end locking position. This gives a self-locking function which helps the user to fix the carrier to the car.

If the normal from the sliding surface at the contact point between the step surface and the sliding surface is past the locking member axis, seen from the lever side, the locking member has a stable semi-open position which helps even more.

### DESCRIPTION OF THE DRAWINGS

In the following the invention will be described with reference to the drawings, on which
Fig. 1 shows a bicycle carrier on a schematic car,
Fig. 2 shows part of the carrier with the clamping device in a perspective view,
Fig. 3 shows the clamping device opened from the back with the locking member in a semi-open position,
Fig. 4 shows the clamping device as in fig. 3 but with the locking member in a locked position,
Fig. 5 shows in a perspective view the clamping device in a Icoking position,
Fig. 6 shows in a perspective view the clamping device in the semi-open position,
Fig. 7 shows the clamping device with the towbar stem coming from the car to the right and
Fig. 8 shows an embodiment according to invention, which concerns the actuating part.

### DETAILED DESCRIPTION OF THE EMBODIMENTS

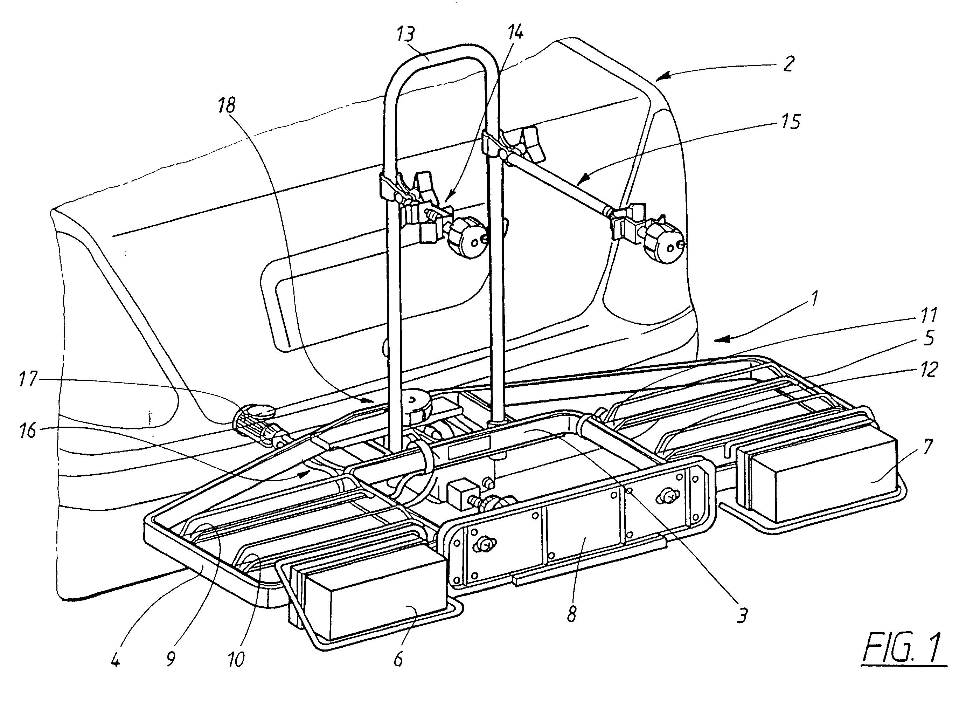

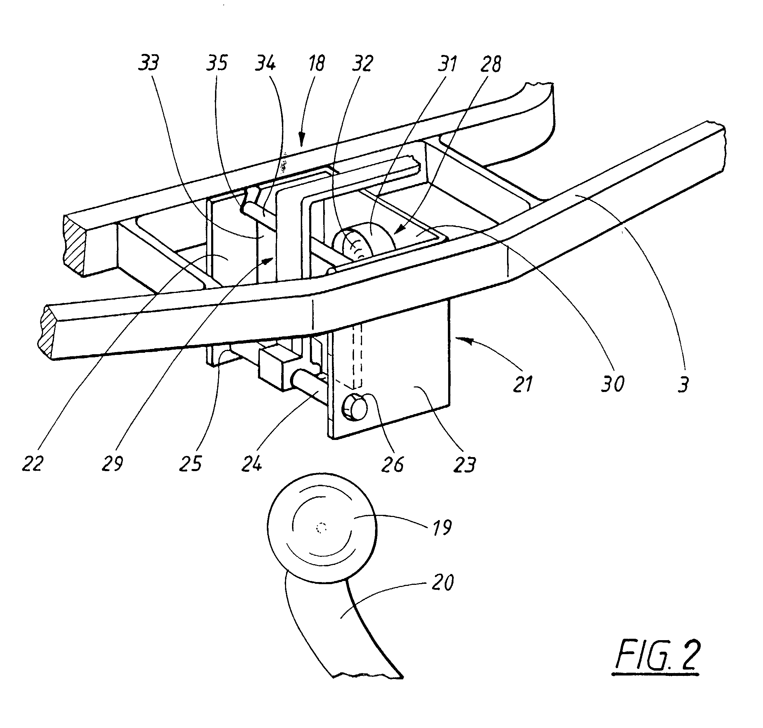

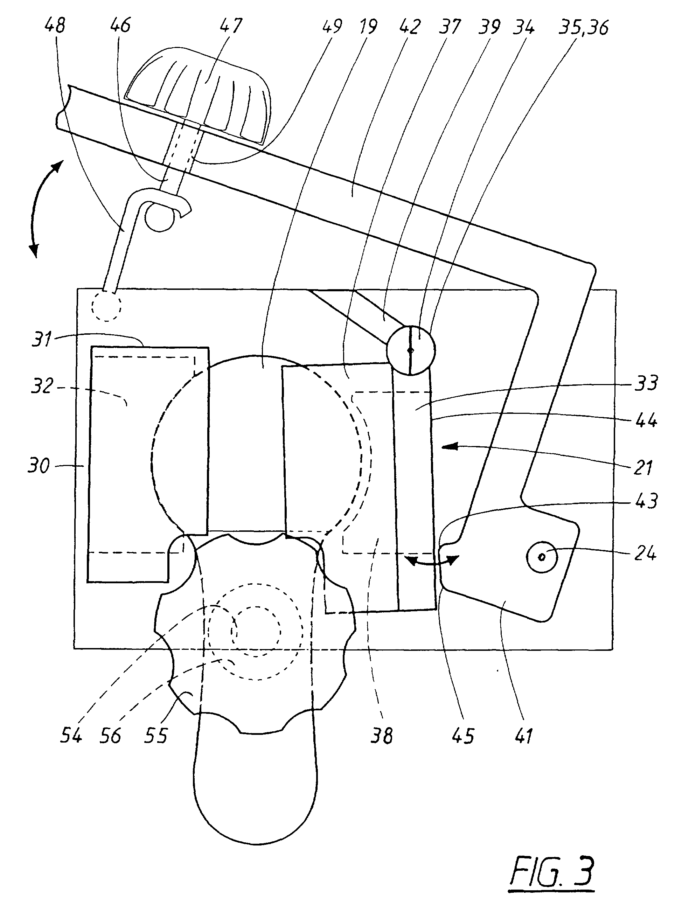

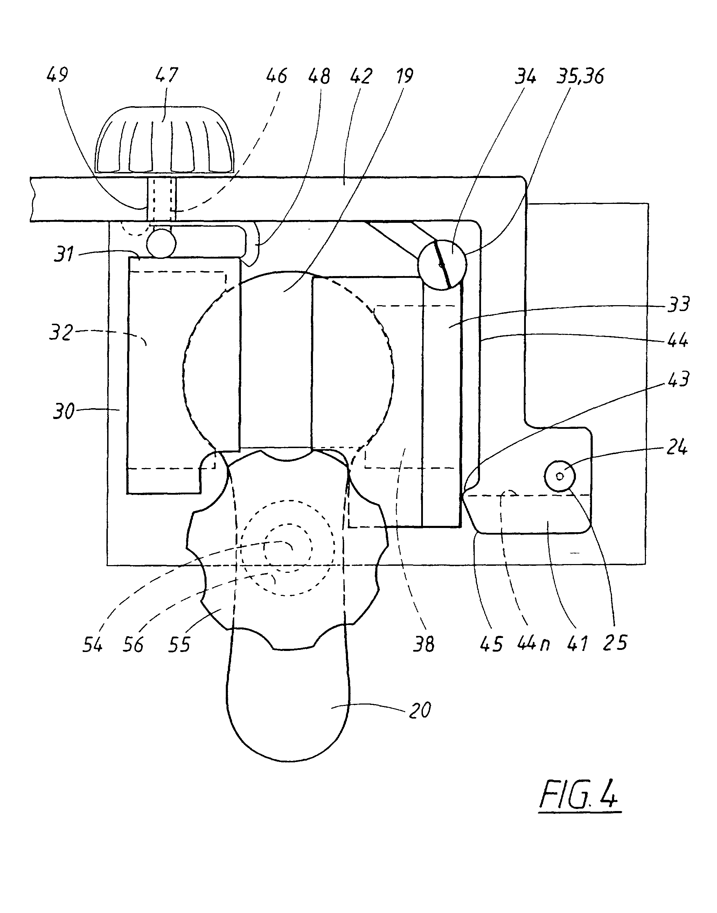

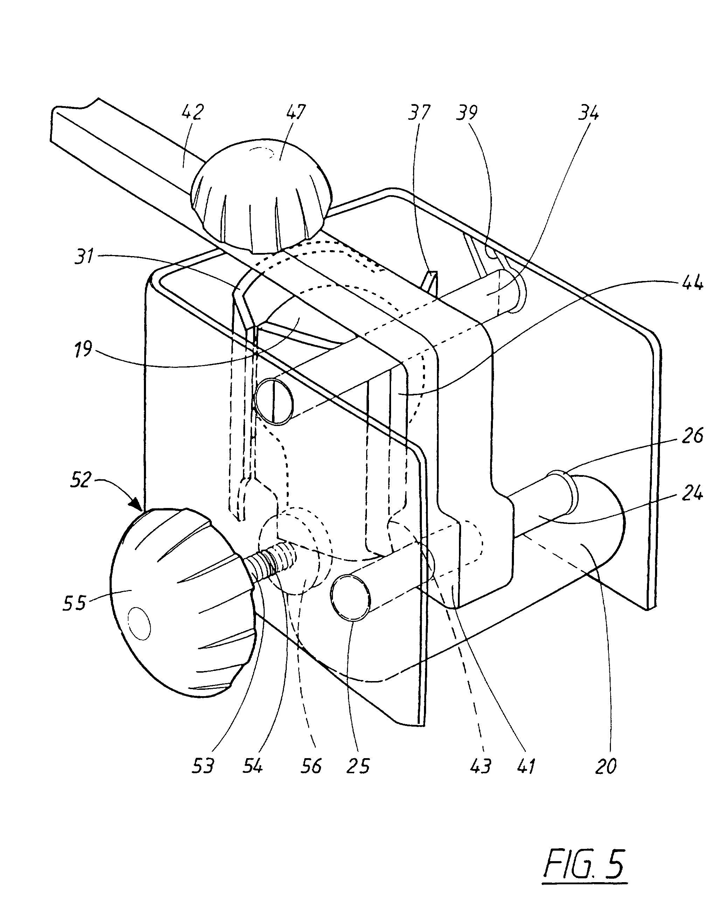

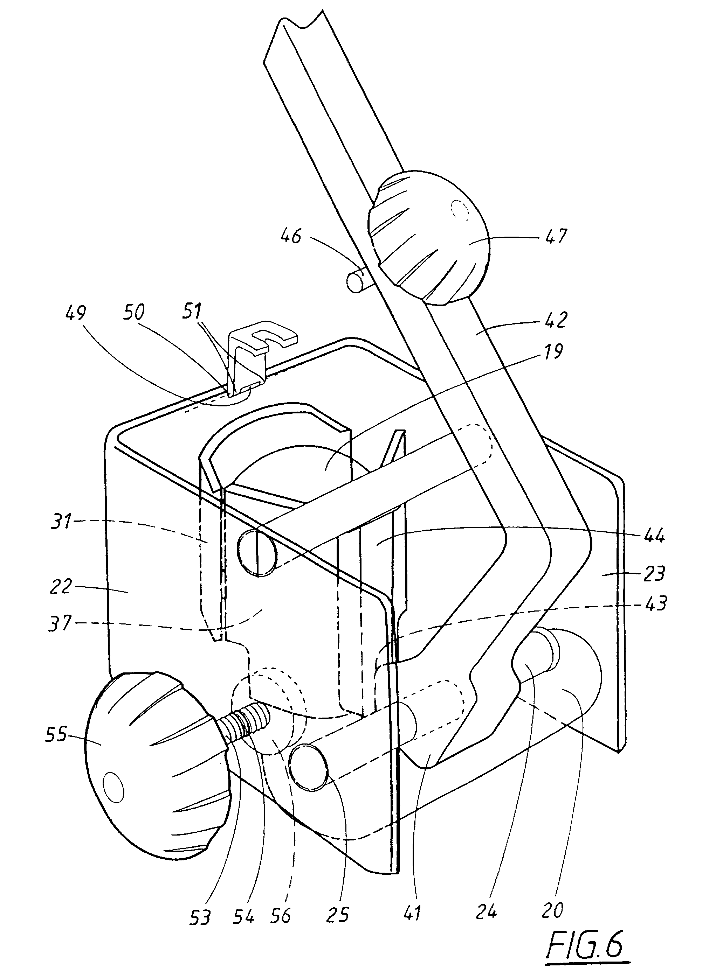

As can be seen in fig. 1, a bicycle carrier 1 is shown, attached to a schematicly shown car 2, as a good example of the use of cargo carriers. The bicycle carrier comprises a platform 3 which is made of iron or steel bands and which is of a well known kind and shall therefore not be described in great detail here. Nevertheless, the platform 3 comprises one left and one right wing 4,5, which each holds one taillight 6,7. The taillights are complementary, in many countries a statutory provision, as the ones on the car are easily hidden behind the cargo, and for the same reasons a licence plate holder 8 for an extra licens plate is provided. The platform is built for two bicycles, as can be seen from the two wheel ditches 9,10 and 11,12 on the wings 4,5 respectively. Raising from the platform is a U-shaped retaining bar 13 with one short 14 and one long 15 bicycle holder for the inner and outer bicycle respectively. The holders also are of a well known type and need not to be described in detail. An electric cabling 16 with a connector 17 for the lights is also furnished.
Attached to the platform is a clamping device 18. The clamping device 18 is shown and described in relation to figures 2-7.
The clamping device 18 is shown from the car side in fig. 2 together with the middle part of the platform 3, located between the wings 4 and 5, to which middle part the clamping device is attached, and with a towbar ball 19 on a towbar stem 20 in order to show the position for use. The clamping device has a three-sided, mainly rectangular housing 21 with vertically arranged walls, consisting of rigid sheet metal. The open wall is arranged to the side, seen in relation to a longitudinal direction of the platform, as attached to a car. Across the opening at the open wall, between the adjacent walls 22,23, a locking member axis 24 is arranged. The axis is pivotably supported in axis openings 25,26 in the walls 22,23 and mainly parallell to the longitudinal direction of the platform.
In the housing, a first and a second clamping member 28 and 29 are arranged. The first clamping member 28 comprises a first holding member 31, which is attached, e.g. by welding, to the joining wall 30, and a first ball cup 32, contained in the holding member 31 and shaped to fit at part of the ball 19. The second clamping member 29 comprises a second supporting member 33, which is attached to a supporting member axis 34, which in turn is pivotably arranged at the upper part of the side walls 22,23 in parallell of axis 24, in holes 35 and 36 respectively. Further, the second clamping member comprises a holding member 37 with a second ball cup 38, both attached to the second supporting member (see fig. 3), also shaped to fit part of the ball 19. The ball cups 32 and 38 are made from steel or a steel alloy. It is advantageous if the inner diameter of the cups is somewhat smaller than the diameter of the ball. In that case the clamping grip on the ball from the cups will be improved, compared to equal diameters, as the grip will be enhanced at the rim of the cups, which gives a good torque. As an example can be mentioned that if the ball has a diameter of 50 mm, the cups can have 49,6 mm.
From each of the holes 35 and 36 an entering channel 39 and 40 are inclining to the upper rim of wall 22 and 23, respectively for the entering af the supporting member axis 34. The height of the channel is a little smaller than the diameter of the supporting member axis, and to still allow for entering, the endings of the axis 34 are partly cut, along the axis, so that the axis can enter with the supporting member taking a certain angle relatively to the housing 21. After entering, the supporting member is pivoted slightly, and then it's effective diameter in relation to the entering channel is big enough to retain the axis in position.
The axis 24 supports at its middle part an actuating part 41, protruding from the axis (see fig. 3 and 4) in a direction towards the second supporting member 29. Integrated with the actuating part 41 is a tensioning lever 42, reaching from the actuating part upwards over the height of the housing 21 and the platform level and from there bent about at a right angle to be able to mainly level with the platform 3 as shall be described in the further text.
At the outer end, the actuating part comprises a rounded cam surface 43. The second supporting member comprises, on the side that faces the actuating member, a sliding surface 44. The cam surface 43 and sliding surface 44 are arranged to cooperate as the actuating part with the aid of the tensioning lever is pivoted around the locking member axis 24 in the following way.
At the start (see fig. 3 and 6), the supporting member is hanging loose from its axis holes 35,36 and the cam surface 43 during pivoting counterclockwise around locking member axis 24 approaches and contacts the sliding surface 44. After contact is made and the actuating part continues to pivot around it's axis 24, the supporting member 33 is forced to pivot around it's axis 34 and dose the gap around the ball 19. The clamping device 18 is designed in the way that the gap is closed and a strong tension in the different members of the device is created, just before the actuating part reaches it's largest effective length, i.e. just before the normal of the sliding surface at the contact point crosses the center of the locking member axis 24. If then via manouvring of the tensioning lever the actuating part is forced further, the tension passes it's maximum and then the said normal passes the center of axis 24 (see fig. 4) just a little, until the tensioning lever 42 reaches an end position, countering the upper rim of wall 30 of the housing 21 and levelling with the platform. Thus a self-locking effect is achieved.
As can be seen in fig. 3 and 4, the actuating part comprises a knee 45 below the cam surface. The knee 45 is designed to stabilize the tensioning lever and the actuating part in a semi-open position, as can be seen in fig 3. This is very useful when the carrier shall be adjusted to fit accurately an the towbar ball. The portion of the actuating part between the knee 45 and the cam surface 43 then take a stable stand against the sliding surface 44.
To secure the tensioning lever 42 rigidly, the lever comprises a T-ended, threaded screw 46, a tightening knob 47, fitting the threads of the screw 46, and a claw member 48, pivotably attached to the housing 21. The T-ended screw 46 is positioned with it's T-end underneath the lever and the knob 47 is threaded onto the screw on the upper side. The screw is passing through a hole 49 in the lever, which hole is larger than necessary for the screw to pass, so that the screw can take different angles in the hole. This is necessary in order for the user to be able to manipulate the screw to grip under the outer, hooked end of the claw 48. As can be seen in fig. 3, the claw 48 and the screw 46 with the knob 47 holds the lever safely in it's semi-open position.
When the lever is in it's locked position (see fig. 4 and 5), the claw member 48 is tilted downwards and the T-ended screw is then tightened, with the knob 47, to the claw at a position closer to the pivoting center of the claw 48, compared to it's position when the lever 42 is in it's semi-open posittion.
In fig. 6 it can be seen that the claw 48 is attached to the wall 30 with the aid of a hollow tube 49, welded to the wall, and a claw axis 50, reaching through the tube 49 and two surrounding, fastening ears 51, shaped at the claw end.
At the wall 22, the rear wall of the housing 21, seen from the car, a supporting adjuster 52 is arranged. The adjuster 52 comprises a threaded member 53, which is arranged in a correspondingly threaded hole 54 in the wall 22. At the outside of the threaded member a turning wheel 55 is fastened, and at the inside a thrust piece 56, which is freely rotatable around the threaded member 53.
The function of the supporting adjuster 52 is to support the cargo carrier when it is adjusted in it's optimal position on the towbar and to secure it at the right tilting angle when loading and unloading the carge,i.e. the bicycles. During this process the thrust piece 56 is brought int contact with the towbar stem, just under the ball, via manipulating of the turning wheel 55.

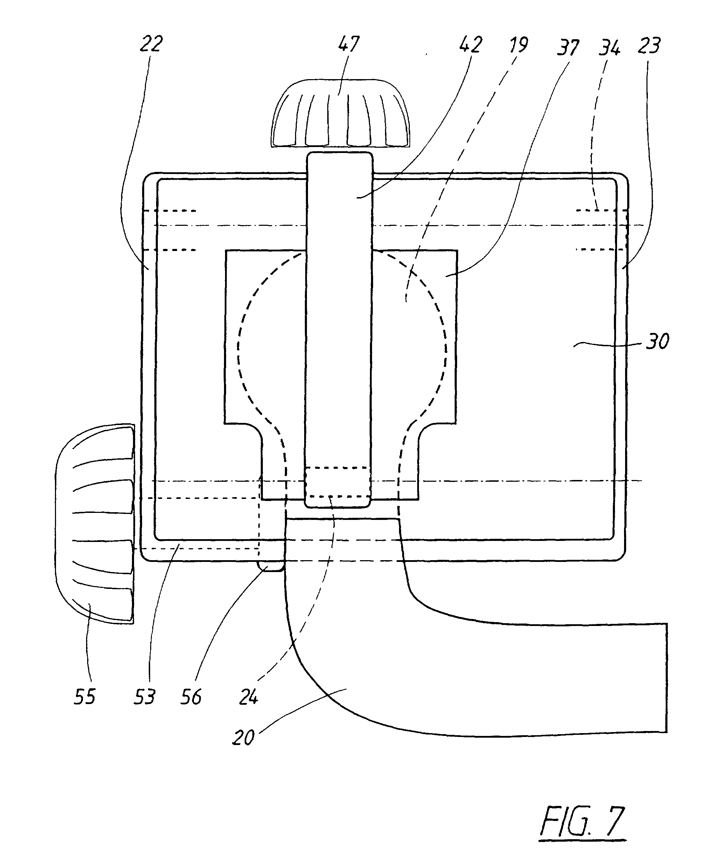

In fig. 7 the clamping device 18 is shown from the open side of the housing 21 with the tensioning lever 42 in the closed position. Some parts like the locking member axis have been omitted to get a better view of the supporting adjuster 52. The supporting adjuster is also used for tilting the device in a controllable manner when i.e. the luggage compartment has to be opened.

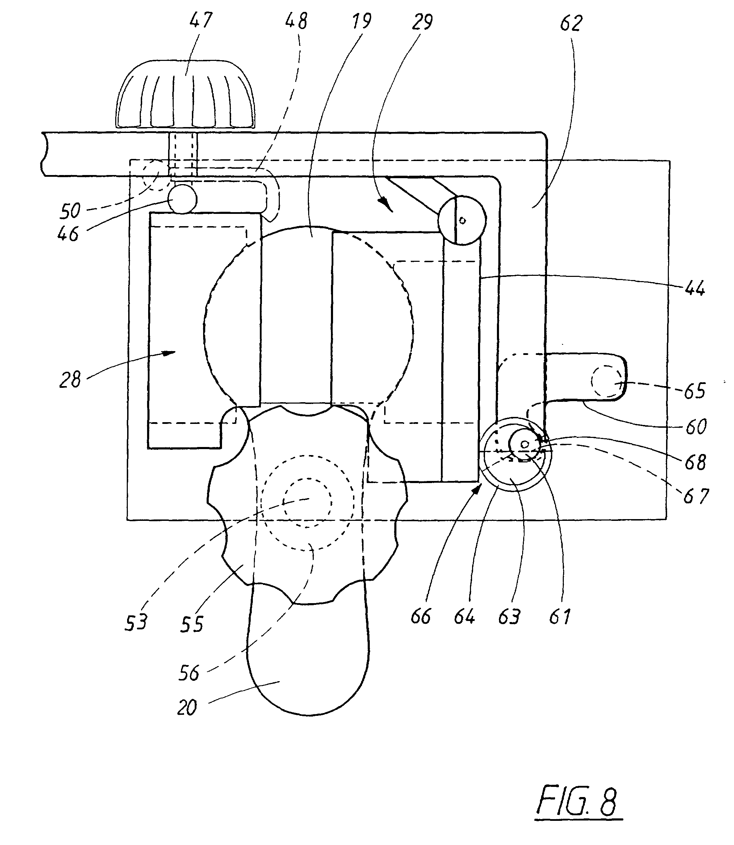

In fig. 8 an alternative embodiment showing the invention with a differently designed actuating part is shown, having a single adjustment possibility to compensate wear. The walls 22 and 23 of the housing 21 in this embodiment has each an L-shaped opening 60 for a modified locking member axis 61. At the middle of the locking member axis 61 is arranged the tensioning lever 62, and on both sides of the lever 62 each an excenter 63, which is non-rotatable vis-a-vis the locking member axis 61. Circumfering the each of the excenters 63, which have a circular circumference, are two cylindrical shells 64. The shells 64 are substitutable, although their clearance to the excenters is very tight The reason for the shells to be substitutable is that the effective height of the excenters can be modified by changing between shells of different thicknes to compensate for component tolerances and wear.
The locking member axis 61 is positioned with it's ends in the L-shaped openings 60. When the cargo carrier is attached to the tow bar and the clamping device 18 shall enter the ball 19, the movable clamping member 29 must be able to open, i.e. swing freely in a direction corresponding to the right in fig. 8. In order to free the clamping member 29 the locking member axis 61 is then manually manipulated to the right of the L-shaped opening 60 to a position marked 65 in fig. 8. This gives space enough for the clamping member 29. When the damping shall take place, the locking member axis is manipulated to the position 61, near the "toe" of the L-shaped openings. In order to retain the locking member axis in position during locking operation, the toe of the L-shaped openings have a recess 68, positioned in the counter-tensioning direction. Then the tensioning lever 62 is brought into the locking position and the T-ended screw 46 is tightened by the knob 47. The top 66 of the excenters are so positioned on the locking member axis that according to the invention the normal 67 from the sliding surface 44 through the contact point between the excenters and the sliding surface is passed beyond the centre of the locking member axis 61 to have a self locking effect. It is possible to allow the cylindrical shells to rotate during locking operation.

The above described and disclosed embodiment of the invention should not in any way limit the scope of the invention; the full scope is defined through the following claims. As an example the mounting of the movable clamping member can be designed with a non-detachable axis arrangement. Also the securing mechanism for the tensioning lever can be designed differently, the simpliest locking device being a strap. Also the cam surface and the sliding surface arrangement does not necessarily have to reach the self-locking position; the main thing is that the mechanism can achieve the force necessary to safely secure the clamping device to the ball, and that is achieved when the actuating part approaches it's maximum length. Also the cups 32 and 38 can be designed to very closely but not in contact with circumfere the towbar stem, when the clamping device is in it's locking mode. This gives an extra stability to the cargo carrier on the car. One side of the stem must be left cleared though, the one facing rearwards from the towbar, as the tilting ability is still wanted.

## Claims

1. Auxiliary cargo carrier for motorcars, especially a bicycle carrier (1), the carrier, when in use, being arranged on and supported by a towbar (19,20), mounted on the car (2), and which carrier comprises a support platform (3) or the like for the cargo, a clamping device (18) attached to the platform for clamping the platform to a towbar ball (19), the clamping device comprising two clamping members (28,29), having each a ball cup (32,38), designed to partly fit against the respective of two mainly opposite parts of the towbar ball (19), one of the clamping members (29) being movably arranged in the clamping device (18), and a locking member (41,42), pivotably arranged to, when actuated, force the movably arranged clamping member (29) towards the other clamping member (28) in order to clamp the towbar ball (19), whereby the locking member (41,42,63,64) is pivotable around a locking member axis (24,61) and comprises an actuating part (41,63), protruding from the locking member axis (24) and having a cam surface (43,64), facing the movably arranged clamping member (29), and a lever (42,62), attached to the actuating part (41,63,64), for pivoting the actuating part around the locking member axis (24,61) to either of an end locking position or a position away therefrom, whereby the movably arranged clamping member (29) has a supporting member (33), which is carrying the ball cup (38) and is extending from and pivotably arranged with a clamping member axis (34), spaced from the ball cup (38), and whereby the supporting member has a sliding surface (44), facing the actuating part cam (41,63), the sliding surface (44) and the actuating part cam surface (43,64) being arranged to cooperate in pivoting the movably arranged clamping member (29) around its axis (34) from a loose hanging position towards the other clamping member (28) to a clamping position where the ball cups (32,38) are clamping the towbar ball (19) under tension, whereby the sliding surface (44), the actuating part cam surface (43,64) and the lever (42,62) are arranged in the way that the actuating part cam surface (43,64) is near or at a position where the sliding surface normal (44n,67) through the contact point between the sliding and cam surfaces (44 and 43,64) intersects the locking member axis (24), i.e. at a locking position, when the lever (42,62) is at its end locking position **characterized in that** the actuating part, protruding from the locking member axis (61), comprises at least one eccenter part (63), non-rotatably arranged on the locking member axis having a circular circumference and **in that** the eccenter part (63) is tightly circumfered by a substitutable, cylindrical shell (64).

2. Auxiliary cargo carrier according to claim 1, **characterized in that** the cylindrical shell (64) is rotatably arranged on the eccenter part (63).

3. Auxiliary cargo carrier according to claim for 2, **characterized in that** the normal (44n,67) through the contact point is past the actuating part axis (24,61) when the lever (42,62) is in its end locking position.

4. Auxiliary cargo carrier according to any of the claims 1-3, the clamping device (18) comprising a housing (21), **characterized in that** the walls (22 and 23) of the housing (21) each have an L-shaped opening (60) for the locking member axis (61), whereby the locking member axis (61) is positioned with its ends in the L-shaped openings (60), the locking member axis 61 being able to be manipulated to a first position (65) where the movable member (29) is able to swing freely and a second, the locking member axis (61) retaining position (68) in which the clamping can take place.

## Patentansprüche

1. Hilfs-Lastenträger für Fahrzeuge, insbesondere Fahrradträger (1), wobei der Träger während des Gebrauchs an einer Zugstange (19, 20) die an dem Fahrzeug (2) angebracht ist, angeordnet und mittels dieser gelagert ist, und wobei der Träger folgendes aufweist:
- eine Halteplattform (3) oder ähnliches für die Last,
- eine Klemmvorrichtung (18), die an der Plattform angebracht ist, um die Plattform mit einer Kugel (20) der Zugstange zu verklemmen, wobei die Klemmvorrichtung zwei Klemmelemente (28, 29) aufweist, welche jeweils eine Kugelpfanne (32, 38) haben, die so ausgestaltet ist, dass sie teilweise mit der entsprechenden der zwei im Wesentlichen gegenüberliegenden Teile der Kugel (20) der Zugstange zusammenpasst, wobei eines der Klemmelemente (29) bewegbar in der Klemmvorrichtung (18) angeordnet ist, sowie
- ein Verriegelungselement (41, 42), das so kippbar angeordnet ist, dass es, wenn es betätigt wird, das bewegbar angeordnete Klemmelement (29) in Richtung des anderen Klemmelements (28) zwingt, um die Kugel (20) der Zugstange zu verklemmen,
wobei das Verriegelungselement (41, 42, 63, 64) um eine Verriegelungsachse (24, 61) kippbar angeordnet ist und einen Betätigungsteil (41, 63) aufweist, welcher von der Verriegelungsachse (24) hervorsteht und eine Nockenfläche (43, 64) hat, die dem bewegbar angeordneten Klemmelement (29) gegenüberliegt, sowie einen Hebel (42, 62), der an dem Betätigungsteil (41, 63, 64) angebracht ist, um den Betätigungsteil um die Verriegelungsachse (24, 61) herum entweder in eine Endverriegelungsstellung oder eine davon beabstandete Position zu kippen,
wobei das bewegbar angeordnete Klemmelement (29) ein Halteelement (33) hat, welches die Kugelpfanne (38) trägt und sich von einer Klemmachse (34) her erstreckt und kippbar mit dieser angeordnet ist, beabstandet von der Kugelpfanne (38),
wobei das Halteelement eine Gleitfläche (44) hat, welche der Nocke (41, 63) des Betätigungsteils gegenüberliegt, wobei die Gleitfläche (44) und die Nockenfläche (43, 64) des Betätigungsteils so angeordnet sind, dass sie beim Kippen des bewegbar angeordneten Klemmelements (29) um seine Achse (34) von einer lose hängenden Position in Richtung des anderen Klemmelements (28) in eine Klemmposition zusammenwirken, in der die Kugelpfannen (32, 38) die Kugel (20) unter Spannung verklemmen, und
wobei die Gleitfläche (44), die Nockenfläche (43, 64) des Betätigungsteils sowie der Hebel (42, 62) so angeordnet sind, dass die Nockenfläche (43, 64) des Betätigungsteils nahe oder an einer Position ist, wo die Normale auf die Gleitfläche (44n, 67) durch den Kontaktpunkt zwischen der Nockenfläche (43, 64) und der Gleitfläche (44) die Verriegelungsachse(24) schneidet, d.h. an einer Verriegelungsposition, wenn der Hebel (42, 62) sich in seiner Endverriegelungsposition befindet,
**dadurch gekennzeichnet, dass**
der Betätigungsteil, hervorstehend von der Verriegelungsachse (61), zumindest einen Exzenterteil (63) aufweist, der nicht drehbar an der Verriegelungsachse angebracht ist und einen kreisförmigen Umfang hat, und dass der Exzenterteil (63) fest umgeben ist von einer austauschbaren, zylindrischen Schale (64).

2. Hilfs-Lastenträger nach Anspruch 1, **dadurch gekennzeichnet, dass** die zylindrische Schale (64) drehbar an dem Exzenterteil (63) angebracht ist.

3. Hilfs-Lastenträger nach Anspruch 1, **dadurch gekennzeichnet, dass** die Normale (44n, 67) durch den Kontaktpunkt sich hinter der Achse (24, 61) des Betätigungsteils befindet, wenn sich der Hebel (42, 62) in seiner Endverriegelungsposition befindet.

4. Hilfs-Lastenträger nach einem der Ansprüche 1 bis 3, wobei die Klemmvorrichtung (18) ein Gehäuse (21) aufweist, **dadurch gekennzeichnet, dass** die Wände (22, 23) des Gehäuses (21) jeweils eine L-förmige Öffnung (60) für die Verriegelungsachse (61) haben, wodurch die Verriegelungsachse (61) mit ihren Enden in den L-förmigen Öffnungen (60) positioniert ist, wobei die Verriegelungsachse (61) in eine erste Position (65) bringbar ist, wo das bewegliche Element (29) frei schwingen kann, und in eine zweite, die Verriegelungsachse (61) zurückhaltende Position (68), in welcher das Verklemmen stattfinden kann.

## Revendications

1. Porte-charge auxiliaire pour véhicule automobile, spécialement porte-bicyclette (1), le porte-charge étant agencé, en utilisation, sur une barre d'attelage (19, 20) montée sur le véhicule (2) et supporté sur celle-ci, et ledit porte-charge comprenant une plate-forme de support (3) ou similaire pour la charge, un dispositif à pince (18) attaché sur la plate-forme pour pincer la plate-forme sur une boule d'attelage (19), le dispositif à pince comprenant deux éléments de pince (28, 29) ayant chacun une coupelle sphérique (32, 38) conçue pour s'engager partiellement contre la partie respective des deux parties principales opposées de la boule d'attelage (19), l'un des éléments de pince (29) étant agencé de façon mobile dans le dispositif à pince (18), et un élément de verrouillage (41, 42) agencé en pivotement de manière à forcer, lorsqu'il est actionné, l'élément de pince (29) agencé de façon mobile vers l'autre élément de pince (28) afin de pincer la boule d'attelage (19), grâce à quoi l'élément de verrouillage (41, 42, 63, 64) est capable de pivoter autour d'un axe de verrouillage (24, 61) et comprend une partie d'actionnement (41, 63) qui se projette depuis l'axe de verrouillage (24) et qui comporte une surface de came (43, 64) en face de l'élément de pince (29) agencé de façon mobile, et un levier (42, 62) attaché sur la partie d'actionnement (41, 63, 64) pour faire pivoter la partie d'actionnement autour de l'axe de verrouillage (24, 61) soit vers une position de verrouillage finale soit vers une position en éloignement de celle-ci, grâce à quoi l'élément de pince (29) agencé de façon mobile comprend un élément de support (33) qui porte la coupelle sphérique (38) et s'étend depuis l'axe (34) de l'élément de pince en étant agencé en pivotement, de façon écartée depuis la coupelle sphérique (38), et grâce à quoi l'élément de support a une surface de coulissement (44) qui fait face vers la came de la partie d'actionnement (41, 63), la surface de coulissement (44) et la surface de came (43, 64) de la partie d'actionnement étant agencées afin de coopérer pour faire pivoter l'élément de pince (29) agencé de façon mobile autour de son axe (34) depuis une position en suspension libre vers l'autre élément de pince (28) vers une position de pincement dans laquelle les coupelles sphériques (32, 38) pincent la boule d'attelage (39) sous tension, grâce à quoi la surface de coulissement (44), la surface de came (43, 64) de la partie d'actionnement, et le levier (42, 62) sont agencés de telle manière que la surface de came (43, 64) de la partie d'actionnement se trouve au voisinage de ou à une position à laquelle la perpendiculaire (44n, 67) à la surface de coulissement passant par le point de contact entre la surface de coulissement et la surface de came (44 et 43, 64) recoupe l'axe de verrouillage (24), c'est-à-dire à une position de verrouillage, quand le levier (42, 62) se trouve dans sa position de verrouillage finale, **caractérisé en ce que** la partie d'actionnement, qui se projette depuis l'axe (61) de l'élément de verrouillage, comprend au moins une partie excentrique (63), agencée sans faculté de rotation sur l'axe de l'élément de verrouillage ayant une circonférence circulaire, et **en ce que** la partie excentrique (63) est intimement entourée par une coque cylindrique (64) remplaçable.

2. Porte-charge auxiliaire selon la revendication 1, **caractérisé en ce que** la coque cylindrique (64) est agencée avec faculté de rotation sur la partie excentrique (63).

3. Porte-charge auxiliaire selon l'une ou l'autre des revendications 1 et 2, **caractérisé en ce que** la perpendiculaire (44n, 67) passant par le point de contact se trouve au-delà de l'axe (24, 61) de la partie d'actionnement quand le levier (42, 62) se trouve dans la position de verrouillage finale.

4. Porte-charge auxiliaire selon l'une quelconque des revendications 1 à 3, dans lequel le dispositif à pince (18) comprend un boîtier (21), **caractérisé en ce que** les parois (22 et 23) du boîtier (21) ont chacune une ouverture (60) en forme de L pour l'axe (61) de l'élément de verrouillage, grâce à quoi l'axe (61) de l'élément de verrouillage est positionné avec ses extrémités dans les ouvertures (60) en forme de L, l'axe (61) de l'élément de verrouillage pouvant être manipulé vers une première position (65) dans laquelle l'élément mobile (29) est capable de pivoter librement, et une seconde position (68), qui retient l'axe (61) de l'élément de verrouillage, dans laquelle le pincement peut avoir lieu.
